# EUROPEAN PATENT APPLICATION

(11) **EP 3 742 002 A1**
(43) Date of publication of application: **25.11.2020**
(21) Application number: 19176350.7
(22) Date of filing: 24.05.2019
(51) Int. Cl.: F16B 2/00, B05D 5/02, C25D 13/12, C25D 15/00

(54) **CONNECTING ELEMENT FOR THE FRICTION-INCREASING CONNECTION OF COMPONENTS, PROCESS FOR MAKING A CONNECTING ELEMENT AND USE OF A CONNECTING ELEMENT**

(71) Applicant: 3M Innovative Properties Company, Saint Paul, MN 55133-3427 (US)
(72) Inventor: Daub, Dominik, 87435 Kempten (DE)
(74) Representative: Mössner, Brigitte

(57) **Abstract**

The present disclosure relates to a connecting element and to a process for producing said connecting element.

The present disclosure further relates to the use of said connecting element to connect a first component and a second component to be joined in machine, plant and motor vehicle construction and energy generation.

## Description

### Technical Field

The present disclosure relates to a connecting element for the friction-increasing connection of components to be joined.

### Background

Force-locked connections are frequently used in all areas of machine, plant and motor vehicle construction and energy generation for the transmission of forces or torques. The amount of force that can be transmitted depends not only on the structural design but also primarily on the static friction value (coefficient of static friction) of the component surfaces connected to one another. Therefore, in the case of such force-locked connections, it is endeavored to provide friction-increasing measures that allow the greatest possible transverse forces and torques to be transmitted safely. Further, force-locked connections may also be referred to as non-positive connections or frictional connections.

It is known to use friction-increasing interlayers to increase the holding forces or increase the torques than can be transmitted in bolted and clamped connections. US 6,347,905 B1 discloses a connecting element for the friction-increasing play-free reversible connection of components to be joined. The connecting element comprises a spring-elastic steel foil which bears on its surface particles of a defined size, which are fixed on the spring-elastic foil by means of a metallic binder phase. The particles consist of a hard material, preferably of diamond, cubic boron nitride, aluminum oxide, silicon carbide or boron carbide. The metallic binder phase preferably is nickel. By using this separate connecting element, the coefficient of static friction can be increased in frictional connections.

The hard particles which are fixed on the spring-elastic foil by means of a metallic binder phase are coated on the spring-elastic foil by a galvanic process, preferably by an electroless coating process. This process is time-consuming and expensive.

For many bolted or clamped connections, the components to be joined need to be prevented from corrosion. This is particularly needed if vehicles or machines are used in corrosive environments, or if the bolted parts consist of different materials, for example carbon steel and aluminum. These connections need to be prevented from fretting or electrochemical corrosion, and the surface of the parts to be joined should not be damaged to allow a reversible connection of the parts.

Therefore, there is a need to further improve frictional connections of components with respect to corrosion resistance. Furthermore, there is a need to provide a connecting element for friction-increasing connection of components to be joined which can be produced by a less time-consuming and more economic process.

### Summary

In a first aspect, the present disclosure relates to a connecting element comprising a metal substrate having a first joining surface on one side of the substrate and a second joining surface on an opposite side of the substrate, wherein each joining surface comprises hard particles fixed on the metal substrate by a binder layer, and wherein the binder layer comprises a polymeric material.

In another aspect, the present disclosure also relates to a process for producing such a connecting element, comprising
providing a metal substrate having a first joining surface on one side of the substrate and a second joining surface on an opposite side of the substrate,
providing hard particles,
fixing the hard particles on the first and the second joining surface with a binder layer, wherein the binder layer comprises a polymeric material.

In yet a further aspect, the present disclosure relates to a process for frictionally-coupling a first and a second component, the process comprising
providing a connecting element as disclosed herein,
providing a first component with a component joining surface and a second component with a component joining surface,
pressing the hard particles of the first joining surface of the connecting element into the component joining surface of the first component, and
pressing the hard particles of the second joining surface of the connecting element into the component joining surface of the second component,
thereby frictionally-coupling the first component and the second component with the connecting element.

In yet a further aspect, the present disclosure also relates to a frictional connection comprising a first component having a component joining surface, a second component having a component joining surface, and a connecting element as disclosed herein, wherein the first and second component are frictionally joined with the connecting element.

In yet a further aspect, the present disclosure also relates to the use of such a connecting element to connect a first component and a second component to be joined in machine, plant and motor vehicle construction and energy generation.

In some embodiments, the connecting element according to the present disclosure is significantly less susceptible to corrosion than the connecting element disclosed in US 6,347,905 B1. Specifically, the connecting element according to the present disclosure is significantly less susceptible to corrosion with respect to moisture, water or any other wet environment.

The connecting element according to the present disclosure can be produced by an economic process. The connecting element disclosed herein can be produced by a process which is less time-consuming than the production process for the connecting element disclosed in US 6,347,905 B1.

In some embodiments, the connecting element according to the present disclosure is suitable for frictional connections where electrochemical corrosion is a problem as well as fretting.

By using a connecting element according to the present disclosure, the coefficient of static friction of frictional connections is increased.

### Brief description of the drawings

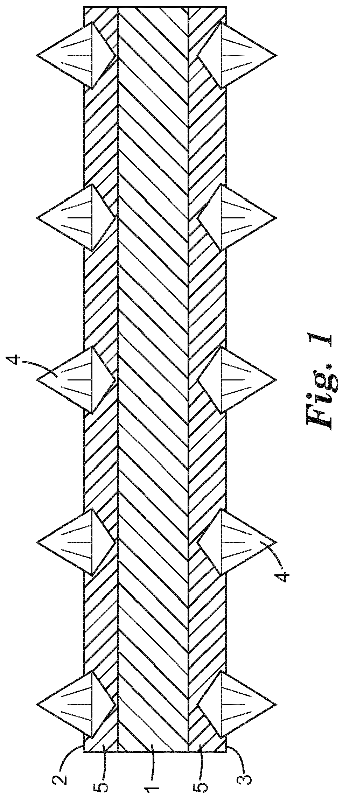

The present disclosure is explained in more detail on the basis of the drawings, in which
Figure 1 schematically shows a cross-sectional view of a connecting element of the present disclosure.

### Detailed Description

The hard particles preferably consist of a material which, under the particular conditions of use, does not react chemically either with the materials of the components to be joined or with environmental media. It is preferably an inorganic material.

The hard particles may be selected from the group consisting of carbides, borides, nitrides, silicon dioxide, aluminum oxide, diamond and mixtures thereof. Examples of carbides are silicon carbide, tungsten carbide and boron carbide, examples of nitrides are silicon nitride and cubic boron nitride. Preferably, diamonds are used as hard particles.

The size of the hard particles is selected in such a way that a sufficient number of particles will interact with the joining surfaces of the components to be joined by being pressed into the surface. Preferably, this is ensured if the particle diameter is greater than two times the peak-to-valley height of the joining surfaces, which peak-to-valley results from machining of the joining surfaces. A mean particle size of 120 µm (d₅₀) or less generally fulfils this requirement. The hard particles may have a mean particle size (d₅₀) from 5 to 120 µm. In some embodiments, the hard particles may have a mean particle size (d₅₀) from 5 to 60 µm, or from 5 to 40 µm, or from 20 to 60 µm, or from 35 to 60 µm. The mean particle size can be measured by laser diffraction (e.g. Mastersizer, wet dispersion).

The hard particles should have a narrow grain size range in which the scatter about a given nominal diameter amounts to no more than about +/- 50%. In some embodiments, the scatter about a given nominal diameter should not amount to more than about +/-25%.

The hard particles are fixed on the metal substrate by a binder layer, the binder layer comprising a polymeric material.

The connecting element disclosed herein comprises a metal substrate having a first joining surface on one side of the substrate and a second joining surface on an opposite side of the substrate. Each joining surface comprises hard particles fixed on the metal substrate by a binder layer, the binder layer comprising a polymeric material.

In some embodiments, the binder layer consists of a polymeric material.

The polymeric material is selected from the group consisting of epoxy materials, acrylic materials, polyester materials, polyurethane materials, formaldehyde resins, polyvinyl acetate (PVAC) materials, polyvinylchloride (PVC) materials, alkyd resins, silicone materials, rubber materials, fluoropolymers and combinations thereof.

In some embodiments, the polymeric material may be an adhesive material. The adhesive property of the polymeric material is useful for pre-assembling the connecting element by gluing it to one of the components to be joined. By gluing, the connecting element will have its correct position on one of the components to be joined and will keep this position during assembling to the second component to be joined. Examples for adhesive materials are rubber-based adhesives, acrylic-based adhesives and silicone-based adhesives.

In some embodiments, the binder layer comprising a polymeric material may be in the form of a lacquer. Aqueous lacquers or non-aqueous lacquers may be used.

In some embodiments of the process disclosed herein, the polymeric material may be in the form of an oil which is hardened after the process of fixing the hard particles with the binder layer. Suitable oils are, for example, silicone oils.

The binder layer of the connecting element disclosed herein may further comprise fillers, pigments and additives. Fillers that can be used in the binder layer may be for example fillers for modifications of surface structure. Pigments that can be used in the binder layer may be for example inorganic or organic color pigments, or pigments for improving corrosion resistance. Additives that can be used in the binder layer may be for example biocides or surfactants.

The connecting element as disclosed herein does not comprise a metallic binder layer for fixing the hard particles on the metal substrate.

The metal substrate may comprise steel. The metal substrate may be made from steel, for example from unalloyed steel. Also low-alloy steel, high-alloy steel or stainless steel can be used. Examples for unalloyed steel are grade C75S - 1.1248 according to DIN EN 10132-4 or grade C60S - 1.1211 according to DIN EN 10132-4. Also non-ferrous metals, aluminum alloys or titanium alloys may be used.

The thickness of the binder layer of the connecting element disclosed herein is from 2 to 100 µm. In some embodiments, the thickness of the binder layer may be from 10 to 70 µm. In some embodiments, the thickness of the binder layer may be from 10 to 30 µm, or from 30 to 70 µm.

In some embodiments, the thickness of the binder layer is at least 15% of the mean particle size (d₅₀) of the hard particles. In some embodiments, the thickness of the binder layer is or at least 20%, or at least 25%, or at least 30% of the mean particle size (d₅₀) of the hard particles. In some embodiments, the thickness of the binder layer is at least 40%, or at least 50%, or at least 60%, or at least 70%, or at least 80% of the mean particle size (d₅₀) of the hard particles.

In some embodiments, the thickness of the binder layer is at most 30% of the mean particle size (d₅₀) of the hard particles. In some embodiments, the thickness of the binder layer is at most 40%, or at most 50%, or at most 60%, or at most 70%, or at most 80%, or at most 90% of the mean particle size (d₅₀) of the hard particles.

In some embodiments, the thickness of the binder layer is at least 15% and at most 30% of the mean particle size (d₅₀) of the hard particles, or at least 30% and at most 60% of the mean particle size (d₅₀) of the hard particles. In some embodiments, the thickness of the binder layer is at least 60% and at most 90% of the mean particle size (d₅₀) of the hard particles.

The hard particles may be protruding from the binder layer by at most 95% of the mean particle size (d₅₀) of the hard particles. In some embodiments, the hard particles are protruding from the binder layer by at most 90%, or by at most 80%, or by at most 70%, or by at most 60% of the mean particle size (d₅₀) of the hard particles.

The hard particles may be protruding from the binder layer by at least 5% of the mean particle size (d₅₀) of the hard particles. In some embodiments, the hard particles are protruding from the binder layer by at least 10%, at least 15%, or by at least 20%, or by at least 25%, or by at least 30%, or by at least 35%, or by at least 40% of the mean particle size (d₅₀) of the hard particles.

The height of the hard particles protruding from the binder layer can be calculated by subtracting the thickness of the binder layer from the mean particle size (d₅₀) of the hard particles.

The number of hard particles per unit surface area of the joining surfaces of the connecting element may be selected in such a way that the normal force which is available for joining the components together is sufficient to ensure that the particles are pressed into the surface of the components to be joined. This will generally be the case if the area percentage of the first and second joining surface of the metal substrate which is covered with hard particles is from 5% to 80%. The area percentage of the joining surfaces of the metal substrate which is covered with hard particles may be selected dependent on the mean particle size (d₅₀) of the hard particles. For example, for a mean particle size (d₅₀) of the hard particles of 25 µm from about 8% to 30% of the joining surfaces of the metal substrate may be covered with hard particles, for a mean particle size (d₅₀) of the hard particles of 35 µm the area percentage may be from about 15% to 60%, for a mean particle size (d₅₀) of 55 µm the area percentage may be from about 20% to 70%, and for a mean particle size (d₅₀) of 75 µm the area percentage may be from about 25% to 80%.

The thickness of the metal substrate is selected depending on the application. In some embodiments, the thickness of the metal substrate is up to 2.0 mm. In other embodiments, the thickness is up to 1.0 or up to 0.5 mm. In some other embodiments, the thickness is up to 0.2 mm, in some other embodiments, the thickness is up to 0.1 mm. For large connecting elements that need to have higher strength and stiffness, for example connecting elements used for parts of wind turbines, the thickness of the metal substrate can be up to 0.5 mm or up to 1.0 mm or up to 2.0 mm. For applications that require a thin connecting element, for example if the design of the components to be joined should not be changed, the thickness of the metal substrate can be 0.2 mm or less, preferably 0.1 mm.

The connecting element disclosed herein may be ring-shaped. The ring-shaped connecting element may be a single piece or may be a segmented ring.

The connecting element as disclosed herein can be produced by a process comprising:
providing a metal substrate having a first joining surface on one side of the substrate and a second joining surface on an opposite side of the substrate,
providing hard particles, and
fixing the hard particles on the first and the second joining surface with a binder layer, wherein the binder layer comprises a polymeric material.

The step of fixing the hard particles on the first and the second joining surface with a binder layer may comprise
fixing the hard particles on the first and the second joining surface with a first layer of the polymeric binder layer, wherein the thickness of the first layer is at least 5% of the mean particle size (d₅₀) of the hard particles, and
embedding the hard particles on the first and the second joining surface with a second layer of the polymeric binder layer, wherein the thickness of the second layer is at least 5% of the mean particle size (d₅₀) of the hard particles.

In some embodiments of the process disclosed herein, the step of fixing the hard particles on the first and the second joining surface with a binder layer comprises fixing the hard particles on the first and the second joining surface with a first layer of the polymeric binder layer, and the thickness of the first layer is at least 5% of the mean particle size (d₅₀) of the hard particles, and the step of fixing the hard particles on the first and the second joining surface with a binder layer comprises embedding the hard particles on the first and the second joining surface with a second layer of the polymeric binder layer, and the thickness of the second layer is at least 10% of the mean particle size (d₅₀) of the hard particles.

In some embodiments of the process disclosed herein, the step of fixing the hard particles on the first and the second joining surface with a binder layer comprises fixing the hard particles on the first and the second joining surface with a first layer of the polymeric binder layer, and the thickness of the first layer is at least 10% of the mean particle size (d₅₀) of the hard particles, and the step of fixing the hard particles on the first and the second joining surface with a binder layer comprises embedding the hard particles on the first and the second joining surface with a second layer of the polymeric binder layer, and the thickness of the second layer is at least 10% of the mean particle size (d₅₀) of the hard particles.

In some embodiments of the process disclosed herein, the step of fixing the hard particles on the first and the second joining surface with a binder layer comprises fixing the hard particles on the first and the second joining surface with a first layer of the polymeric binder layer, and the thickness of the first layer is at least 20% of the mean particle size (d₅₀) of the hard particles, and the step of fixing the hard particles on the first and the second joining surface with a binder layer comprises embedding the hard particles on the first and the second joining surface with a second layer of the polymeric binder layer, and the thickness of the second layer is at least 20% of the mean particle size (d₅₀) of the hard particles.

The hard particles may be fixed with a binder layer on the first and the second joining surface by cathodic dip coating. The binder layer comprises a polymeric material.

By cathodic dip coating, the part to be coated, i.e. the metal substrate, is dipped as cathode into a coating bath with an aqueous dispersion of a coating material. In the process disclosed herein, the coating material comprises hard particles and a polymeric material. A coating is deposited on the metal substrate from the dispersion comprising the hard particles and the polymeric material by direct current. For cathodic dip coating, epoxy materials or acrylic materials may be used as polymeric material. The coating bath is an aqueous bath and typically contains more than 50% of water. The coating bath typically further contains epoxy or acrylic materials, pigments and organic solvents. Suitable organic solvents are, for example, low molecular weight alcohols, aliphatic and aromatic glycol ethers and ketones. Pigments used for the coating bath may be such as titanium dioxide, carbon black, iron oxide, kaolin, talc, lead and aluminum.

The hard particles are added to the coating bath and are suspended in the coating bath. Suitable methods for suspending are stirring, air injection or pumping. Also dispersing agents may be used. The hard particles are fixed on the first and second joining surface of the metal substrate as a result of the deposition of the hard particles through sedimentation and polymeric layer growth due to the direct current which is applied during cathodic dip coating.

The thickness of the layer of the coating material applied by cathodic dip coating typically is from 2 to 60 µm and can be, for example, 2 to 15 µm, 15 to 25 µm, 25 to 35 µm and more than 35 µm. After applying the layer of the coating material, the obtained connecting element may be cleaned, for example using deionized water. After applying the layer of the coating material, the layer of the coating material is hardened, for example thermally at temperatures of 150 to 220 °C.

In some embodiments of the process disclosed herein, the hard particles are fixed with a polymeric binder layer on the first and the second joining surface by cathodic dip coating, and the hard particles are fixed with a polymeric binder layer on the first and the second joining surface with a two-step process. In a first step, the hard particles are fixed on the first and the second joining surface with a first layer of the polymeric binder layer. The thickness of the first layer is at least 5%, or at least 10%, or at least 20% of the mean particle size (d₅₀) of the hard particles. The first step is carried out by cathodic dip coating from a bath comprising a polymeric material and hard particles. In a second step, the hard particles are embedded on the first and the second joining surface with a second layer of the polymeric binder layer. The thickness of the second layer is at least 5%, or at least 10%, or at least 20% of the mean particle size (d₅₀) of the hard particles. The second step is carried out by cathodic dip coating of a polymeric material from an aqueous bath comprising a polymeric material. The material of the polymeric binder layer of the first step may be the same material as the material of the polymeric binder layer of the second step. The material of the polymeric binder layer of the first step may also be a material different from the material of the polymeric binder layer of the second step.

After the hard particles have been fixed with a binder layer on the first and the second joining surface by cathodic dip coating, a further layer of a polymeric material may be coated. The further layer may be, for example, an adhesive layer such as a pressure sensitive adhesive layer. The pressure sensitive adhesive is useful for pre-assembling the connecting element. The pressure sensitive adhesive may be in the form of a tape, or in the form of adhesive microspheres that are sprayed onto the connecting element. The further layer may also be a grease layer applied by dipping.

The hard particles may also be fixed with a binder layer on the first and the second joining surface by anodic dip coating. For anodic dip coating, acrylic materials, phenolic modified acrylic materials, epoxy/polyester materials or polybutadiene oils may be used as polymeric material for the binder layer.

Figure 1 schematically shows a cross-sectional view of a connecting element as disclosed herein. The metal substrate 1 has a first joining surface 2 on one side of the substrate 1 and a second joining surface 3 on an opposite side of the substrate 1. Each joining surface 2, 3 comprises hard particles 4 fixed on the metal substrate 1 by a binder layer 5. The binder layer 5 comprises a polymeric material. In the example shown in Figure 1, the binder layer 5 consists of a polymeric material.

The connecting element as disclosed herein is used in a process for frictionally-coupling a first component and a second component, the process comprising
providing a connecting element as disclosed herein,
providing a first component with a component joining surface and a second component with a component joining surface,
pressing the hard particles of the first joining surface of the connecting element into the component joining surface of the first component, and
pressing the hard particles of the second joining surface of the connecting element into the component joining surface of the second component,
thereby frictionally-coupling the first component and the second component with the connecting element.

The first joining surface of the connecting element is brought into close contact with the component joining surface of the first component, and the second joining surface of the connecting element is brought into close contact with the component joining surface of the second component, and the first and second component are mechanically connected with one another, for example with screws. The hard particles of the first joining surface are pressed into the component joining surface of the first component, and the hard particles of the second joining surface of the connecting element are pressed into the component joining surface of the second component, thereby frictionally-coupling the first component and the second component with the connecting element.

The present disclosure also relates to a frictional connection comprising a first component having a component joining surface, a second component having a component joining surface, and a connecting element as disclosed herein, wherein the first and second component are frictionally joined with the connecting element.

The connecting element disclosed herein can be used to connect a first component and a second component to be joined in machine, plant and motor vehicle construction and energy generation. The connecting element disclosed herein can be used for friction-increasing connection of a first component and a second component to be joined in machine, plant and motor vehicle construction and energy generation. The connecting element disclosed herein can be used for friction-increasing, play-free and/or reversible connection of a first and a second component to be joined in machine, plant and motor vehicle construction and energy generation.

In principle, the connecting element disclosed herein can be used in any type of frictional connection throughout the field of mechanical engineering, and in particular, if the forces which can be transmitted by the component surfaces which are imposed by the design are insufficient.

For example, the connecting element disclosed herein can be used for frictional connections, such as bolted or clamped connections, between parts or components of vehicles, such as subframe and undercarriage, or crankshaft and sprocket, or in camshaft applications, or axle or damper applications, or between parts or components of wind turbines, such as segmented towers or rotor hub and rotor shaft.

The present disclosure will be described in more detail by the following examples.

### Examples

### Examples 1 to 4 (EX1, EX2, EX3, EX4)

### Production of a connecting element (as used for Examples 1 to 4)

For Examples 1 to 4, a steel plate (steel grade DC01) with dimensions 0.8 x 76 x 152 mm³ is used as test substrate and is coated with a cathodic dip coating (CDC) apparatus consisting of a rectifier (Type SVI 4020, Gorkotte GmbH, Frankfurt, Germany) and a protective casing in a 3 liter beaker. The beaker is filled with 3 liters of a mixture of an epoxy-based CDC varnish (KTL-EP-Grundierung 5606, available from Brillux GmbH & Co. KG Industrielack, Unna, Germany) and deionized water in a mass ratio of 4 : 5. 20 g of diamonds with a mean particle size (d₅₀) of 35 µm are dispersed in the varnish-water mixture. The obtained dispersion is heated up to 30 °C on a heating plate (Hei-Tec, Heidolph Instruments GmbH & Co. KG, Schwabach, Nürnberg, Germany) while stirring. The speed of the stirrer depends on the diamond concentration, the minimum speed is defined as the speed when no diamonds are left on the bottom of the beaker, which equals about 200 rpm with a magnetic stirrer in this setup.

The test substrate is mounted by a clamping tool at the cathode of the CDC apparatus, which enables the electrical contact for the coating process. The test substrate is positioned with an angle of about 20° to the vertical axis, so that diamonds can sediment on the inclined steel plate. The sedimentation occurs when the stirring is stopped. After stopping the stirring and waiting for 5 seconds, the coating is carried out for 2.5 seconds at a voltage of 200 V. As a result, a very thin epoxy-based polymer layer of 1 - 2 µm is deposited on the steel plate and diamonds are fixed by the thin epoxy-based polymer layer on the upper joining surface. Due to the inclined steel plate, diamonds are fixed only on one joining surface. The diamonds have to be deposited on the opposite joining surface as well, so the coating is repeated with the steel plate turned to the opposite side. As a result, both joining surfaces are coated with diamonds fixed by a 3 - 4 µm thin epoxy-based polymer layer.

To fasten the diamonds even better in the epoxy-based polymer layer, another coating step is carried out in which only polymer and not diamond is deposited. Therefore, the substrate is placed in a vertical position and the coating is carried out for 15 to 30 seconds at a voltage of 200 V without stirring.

For Example 1, the coating time in vertical position is 15 seconds, for Example 2 it is 20 seconds, for Example 3 it is 25 seconds and for Example 4 it is 30 seconds. The layer of epoxy-based polymer with diamonds fixed by the polymer is coated on both sides with a layer of epoxy-based polymer, thereby embedding the diamonds with a further layer of polymer.

After coating, the epoxy-based polymer coated parts with embedded diamonds are removed from the beaker and are cleaned carefully with a water jet of deionized water to remove non-deposited polymer constituents as well as diamond particles which are not embedded into the polymer matrix. After cleaning, the coated parts are tempered in an oven for 25 minutes at 180 °C, in order to harden the epoxy-based polymer coatings.

The test substrate is almost homogeneously covered with diamonds on both sides. The almost homogeneous coverage is a result of the sedimentation of the diamond particles after the stirring stops. By the stirring, the diamond particles are kept suspended in the varnish-water mixture. The waiting time after stirring and before coating depends on the total diamond concentration in the suspension. The higher the concentration of diamond particles, the longer is the waiting time to achieve a homogeneous diamond coverage.

The area percentage of the joining surface covered with diamonds, herein also referred to as diamond coverage, was measured for both sides using a Leica Microscope with the software Leica Qwin. The grayscale microscope images were analyzed by thresholding.

Ten measurements were performed on each of the two joining surface and the average values are shown in Table 1.

The topography of the joining surface coated with polymer and diamonds was investigated using an optical microscope (Keyence VHX 5000). The microscope images show the diamonds are embedded to about half of their size in the polymer coating. About half of the height of the diamonds, i.e. about 17 µm, are protruding from the surface.

The thickness of the polymer coating layer was measured with an optical film thickness gauge (Pocket Surfix® X, available from PHYNIX GmbH & Co. KG, Germany). A total of twelve measurements, six on each side of the coated substrate were performed to determine the thickness. The average value of the twelve measurements is shown in Table 1.

### Comparative Example 1 (CEX1)

### Production of a connecting element (as used for Comparative Example 1)

For Comparative Example 1, a steel plate (steel grade DC01) with dimensions 0.8 x 76 x 152 mm³ is used as substrate and is coated with a cathodic dip coating (CDC) apparatus consisting of a rectifier (Type SVI 4020, Gorkotte GmbH, Frankfurt, Germany) and a protective casing in a 3 liter beaker. The beaker is filled with 3 liters of a mixture of an epoxy-based CDC varnish (KTL-EP-Grundierung 5606, available from Brillux GmbH & Co. KG Industrielack, Unna, Germany) and deionized water in a mass ratio of 4 : 5.

The varnish-water mixture is heated up to 30 °C on a heating plate (Hei-Tec, Heidolph Instruments GmbH & Co. KG, Schwabach, Nürnberg, Germany) and is stirred with 600 rpm. Stirring is continued while the coating process is performed. The substrate is mounted by a clamping tool at the cathode of the CDC apparatus, which enables the electrical contact for the coating process. The substrate is placed in a vertical position and the coating is carried out for 2 minutes at a voltage of 200 V. The substrate is coated on both sides with a layer of epoxy-based polymer, the polymer having a layer thickness of about 20 µm. The thickness of the polymer coating layer was measured with an optical film thickness gauge as described above.

After coating, the polymer coated parts are removed from the beaker and are cleaned carefully with a water jet of deionized water to remove non-deposited polymer constituents. After cleaning, the coated parts are tempered in an oven for 25 minutes at 180 °C, in order to harden the polymer coatings.

### Comparative Example 2 (CEX2)

### Production of a connecting element (as used for Comparative Example 2)

For the production of a connecting element, a ring-shaped steel foil (steel grade DC01) with a thickness of 0.1 mm, an outer diameter of 30 mm and an inner diameter of 15 mm is coated on both joining surfaces by electroless plating with a nickel layer and diamonds with a mean particle size (d₅₀) of 35 µm. As used herein, the ring-shaped steel foils are also referred to as "shims".

The shims were coated by electroless nickel coating with diamonds having an average particle diameter (d₅₀) of 35 µm fixed by a nickel layer with a thickness of 17 µm. For electroless nickel plating, the shims are placed on suitable racks and are pretreated in accordance with the general rules of electroless nickel plating by degreasing, pickling and activating. Then, the carrier bearing the shims is immersed in a chemical nickel bath in which diamond powder with an average particle diameter of 35 µm is dispersed. The quantity of dispersed diamond powder is selected in such a way that under the parameters prevailing in the coating bath (bath movement, deposition rate), the desired proportion of diamond in the deposited layer of nickel is achieved and the nickel layer reaches the desired thickness. Under customary process conditions, the immersion time amounts to approximately 60 minutes.

The carrier comprising the shims which are now electroless nickel plated, is then removed from the chemical nickel bath and is cleaned in an ultrasonic bath, in order to remove diamond particles which are only loosely attached to the nickel layer. The cleaned shims are taken off the carrier and are subject to a heat treatment for 2 hours at a temperature of at least 150 °C. This treatment increases the adhesion of the chemical nickel layer to the steel foil and the bonding of the diamonds in the layer itself.

The area percentage of the joining surface covered with diamonds is at least 15% on both sides.

### Friction testing

For friction testing, the test substrates with the diamond-polymer coating (Examples 1 to 4) and with the polymer coating (Comparative Example 1), respectively, were cut into squares of 35 x 35 mm². For every test two of these squares are necessary.

The coefficient of static friction is determined by an experimental set-up in which the friction contact is produced by clamping a center steel block (steel S355) with dimensions 14 x 14 x 25 mm between two steel blocks (S355; block 1, block 2) with larger dimensions (30 x 30 x 25 mm) that are pressed by a defined force, representing the normal force, onto the center block. The normal force is generated using a clamping mechanism that is using at least two big screws. The contact pressure for the tests was 50 MPa.

For Examples 1 to 4 and for Comparative Example 1, one of the square samples is positioned between block 1 and the central block and another connecting element is positioned between block 2 and the central block. The two connecting elements are produced as described above, having a thickness of the metallic binder layer as indicated in Table 1.

The outer blocks (block 1, block 2) are positioned on a stiff and flat base plate. The center block is positioned centrally with respect to the outer blocks. This results in a defined distance of the center block from the base plate.

A shear test is performed by applying a compressive load on the center block from top via a piston. The compressive load is representing the friction force. The test is done using a universal testing machine (Zwick GmbH, Model 1474). The friction force is increased until the center block starts to move relative to the outer blocks (these cannot move since they are positioned on the base plate) in direction towards the base plate. The maximum movement of the center block is set to 500 µm. During the shear test normal force, friction force, and distance of the center block from the base plate are measured continuously.

The measured values of friction force and normal force are used to calculate the coefficient of friction that is defined as the ratio of friction force/normal force. The measured distance of the center block from the base plate is used to calculate the movement of the center block relative to the outer blocks. In this way, the coefficient of friction can be obtained in dependence on the measured relative movement, representing the friction behavior or the friction curve. This friction curve is used to determine characteristic values as e.g. for defined relative movements or the maximum coefficient of friction which corresponds to the maximum of the friction curve. The coefficient of static friction µ is defined as the coefficient of friction at a relative movement of 20 µm or as the maximum coefficient of friction if the relative movement at the maximum of the friction curve is below 20 µm.

The results of friction testing of Examples 1 to 4 and Comparative Example 1 are shown in Table 1.

**Table 1:**

| | total thickness of binder layer | diamond coverage | coefficient of static friction µ |
|---|---|---|---|
| | [µm] | [%] | |
| EX1 | 13 | 16 | 0.48 |
| EX2 | 16 | 11 | 0.40 |
| EX3 | 20 | 13 | 0.41 |
| EX4 | 23 | 21 | 0.53 |
| CEX1 | 20 | - | 0.15 |

### Corrosion Testing

Corrosion testing was performed as neutral salt spray test according to EN ISO 9227:2017 using a commercially available test equipment (Corrosion Test Chamber Type HK400, Kohler Automobiltechnik, Lippstadt, Germany). For the test, the test substrates with the diamond-polymer coating (Examples 1 to 4) were cut into squares of 35 x 35 mm² and were placed in a plastic sample holder. For comparison, shims with the diamond-nickel coating (Comparative Example 2) were also placed in the plastic sample holder.

The glass sample holder with the coated test substrates was placed in the test chamber for a duration of 48 hours. Test conditions were:
Temperature: 35 °C ± 2 °C
Concentration of sodium chloride solution: 50 g/l ± 5 g/l
pH-value: 6.5 - 7.2
Condensation rate (horizontal area, 80 cm²): 1.5 ml/h ± 0.5 ml/h
After the test the shims were rinsed with deionized water and dried in a drying cabinet at 110 °C ± 5 °C for two hours. After drying the tested shims were inspected visually.

The results of corrosion testing are shown in Table 2.

**Table 2:**

| | total thickness of binder layer | diamond coverage | results of corrosion test |
|---|---|---|---|
| | [µm] | [%] | |
| EX1 | 13 | 16 | only slight corrosion on edges, no corrosion on surfaces of test samples |
| EX2 | 16 | 11 | only slight corrosion on edges, no corrosion on surfaces of test samples |
| EX3 | 20 | 13 | only slight corrosion on edges, no corrosion on surfaces of test samples |
| EX4 | 23 | 21 | only slight corrosion on edges, no corrosion on surfaces of test samples |
| CEX2 | 17 | 15 | severe corrosion on edges and on surfaces of test samples |

Slight corrosion as used herein is defined as single rusty spots with less than 5% of total surface area. Severe corrosion as used herein is defined as extensive rusty areas with up to 50% of total surface area.

The examples show that a connecting element as disclosed herein can have a coefficient of static friction which is 0.4 or higher and therefore is suitable for many applications of frictional connections. The connecting element as disclosed herein can have an improved corrosion resistance in wet environments (e.g. outdoor). The improved corrosion resistance is important for all applications in which the frictional connections are exposed to moisture, water, or any other wet environment.

## Claims

1. A connecting element comprising a metal substrate (1) having a first joining surface (2) on one side of the substrate and a second joining surface (3) on an opposite side of the substrate, wherein each joining surface (2, 3) comprises hard particles (4) fixed on the metal substrate (1) by a binder layer (5), and wherein the binder layer comprises a polymeric material.

2. The connecting element of claim 1, wherein the polymeric material is selected from the group consisting of epoxy materials, acrylic materials, polyester materials, polyurethane materials, formaldehyde resins, polyvinyl acetate (PVAC) materials, polyvinylchloride (PVC) materials, alkyd resins, silicone materials, rubber materials, fluoropolymers and combinations thereof.

3. The connecting element of claim 1 or 2, wherein the hard particles (4) are selected from the group consisting of carbides, borides, nitrides, silicon dioxide, aluminum oxide, diamond and mixtures thereof.

4. The connecting element of any one of claims 1 to 3, wherein the mean particle size (d₅₀) of the hard particles (4) is from 5 to 120 µm.

5. The connecting element of any one of claims 1 to 4, wherein the metal substrate (1) comprises steel.

6. The connecting element of any one of claims 1 to 5, wherein the connecting element does not comprise a metallic binder layer for fixing the hard particles on the metal substrate.

7. The connecting element of any one of claims 1 to 6, wherein the area percentage of the first and second joining surface (2, 3) of the metal substrate (1) which is covered with hard particles (4) is from 5 to 80%.

8. The connecting element of any one of claims 1 to 7, wherein the thickness of the binder layer (5) is from 2 to 100 µm.

9. The connecting element of any one of claims 1 to 8, wherein the hard particles (4) are protruding from the binder layer by at most 95% of the mean particle size (d₅₀) of the hard particles.

10. The connecting element of any one of claims 1 to 9, wherein the hard particles (4) are protruding from the binder layer by at least 5% of the mean particle size (d₅₀) of the hard particles.

11. A process for producing a connecting element according to any one of claims 1 to 10, comprising
providing a metal substrate (1) having a first joining surface (2) on one side of the substrate and a second joining surface (3) on an opposite side of the substrate,
providing hard particles (4), and
fixing the hard particles (4) on the first and the second joining surface (2, 3) with a binder layer (5), wherein the binder layer comprises a polymeric material.

12. The process according to claim 11, wherein the step of fixing the hard particles (4) on the first and the second joining surface (2, 3) with a binder layer comprises
fixing the hard particles (4) on the first and the second joining surface (2, 3) with a first layer of the polymeric binder layer, wherein the thickness of the first layer is at least 5% of the mean particle size (d₅₀) of the hard particles, and
embedding the hard particles (4) on the first and the second joining surface (2, 3) with a second layer of the polymeric binder layer, wherein the thickness of the second layer is at least 5% of the mean particle size (d₅₀) of the hard particles.

13. A process for frictionally-coupling a first and a second component, the process comprising
providing a connecting element according to any one of claims 1 to 11,
providing a first component with a component joining surface and a second component with a component joining surface,
pressing the hard particles (4) of the first joining surface (2) of the connecting element into the component joining surface of the first component, and
pressing the hard particles (4) of the second joining surface (3) of the connecting element into the component joining surface of the second component,
thereby frictionally-coupling the first component and the second component with the connecting element.

14. A frictional connection comprising a first component having a component joining surface, a second component having a component joining surface, and a connecting element according to any of claims 1 to 11, wherein the first and second component are frictionally joined with the connecting element.

15. Use of a connecting element according to any of claims 1 to 11 to connect a first component and a second component to be joined in machine, plant and motor vehicle construction and energy generation.
